(19) Europäisches Patentamt / European Patent Office / Office européen des brevets

(11) **EP 2 624 479 A1**

(12) **EUROPEAN PATENT APPLICATION**
published in accordance with Art. 153(4) EPC

(43) Date of publication:
**07.08.2013 Bulletin 2013/32**

(51) Int Cl.:
*H04B 7/26* (2006.01)    *H04B 1/16* (2006.01)

(21) Application number: **11829451.1**

(22) Date of filing: **22.02.2011**

(86) International application number:
**PCT/KR2011/001137**

(87) International publication number:
**WO 2012/043944 (05.04.2012 Gazette 2012/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2010   KR 20100093566**

(71) Applicant: **Innowireless Co., Ltd.**
**Gyeonggi-do 463-400 (KR)**

(72) Inventors:
- **JOUNG, Jinsoup**
  **Seongnam-si**
  **Gyeonggi-do 463-500 (KR)**

- **JI, Seunghwan**
  **Seongnam-si**
  **Gyeonggi-do 463-768 (KR)**
- **LIM, Yonghoon**
  **Seoul 142-150 (KR)**
- **LEE, Eunjin**
  **Seongnam-si**
  **Gyeonggi-do 461-140 (KR)**
- **YANG, Seungik**
  **Seoul 151-022 (KR)**

(74) Representative: **Winter, Brandl, Fürniss, Hübner, Röss, Kaiser, Polte - Partnerschaft**
**Alois-Steinecker-Strasse 22**
**85354 Freising (DE)**

(54) **PREAMBLE SEQUENCE DETECTION APPARATUS**

(57)    The present invention relates to a method for shortening the time taken for physical random access channel (PRACH) signal synchronization and preamble sequence detection in an LTE uplink system, and more particularly, to a method for shortening the time taken for preamble sequence detection using an inverse discrete Fourier transform. To this end, a preamble sequence detection apparatus according to the present invention comprises: a reference signal generation unit, which receives a first signal having a predetermined value, generates a preamble sequence, performs a discrete Fourier transform, a subcarrier mapping, and an inverse discrete Fourier transform on the generated preamble sequence, and then expands the resultant signal at a set rate to quantize the resultant signal; a PRACH reception unit which receives a PRACH signal transmitted from a terminal; and a correlation unit which detects a correlation between the reference signal received from the reference signal generation unit and a signal received from the PRACH reception unit.

FIG. 4

**Description**

**Technical Field**

The present invention relates, in general, to a scheme for reducing hardware resources when obtaining synchronization between Physical Random Access Channel (PRACH) signals and detecting a preamble sequence in a Long Term Evolution (LTE) system and, more particularly, to a scheme for reducing hardware resources by using bit shift registers and an adder, instead of using multipliers, upon implementing correlators required to detect a preamble.

**Background Art**

A Long Term Evolution (LTE) system based on an Orthogonal Frequency Division Multiplexing (OFDM) scheme is a next generation mobile communication system which will replace a Universal Mobile Telecommunication System (UMTS) that is a third (3rd) generation mobile communication standard, and is currently being discussed by the 3rd Generation Partnership Project (3GPP). An OFDM scheme is configured to transmit data using multiple subcarriers in a frequency domain. Since such an OFDM scheme transmits data while maintaining orthogonality between subcarriers, it has high frequency efficiency, is robust to frequency selective fading and multi-path fading, and is capable of reducing interference between symbols using a guard period (Cyclic Prefix: CP). Further, an OFDM scheme has an advantage of being robust to impulse noise owing to the simple structure of an equalizer from the standpoint of hardware, thus obtaining optimal transmission efficiency upon transmitting data at high speed.

In 3GPP LTE uplink, a Discrete Fourier Transform (DFT) is performed before mapping between subcarriers is performed so as to solve the problem of a Peak to Average Power Ratio (PAPR) in OFDM technology. This technology is called Single Carrier Frequency Division Multiple Access (SC-FDMA) in LTE. In LTE uplink, Zadoff-Chu Constant Amplitude Zero Auto Correlation (CAZAC) (hereinafter referred to as 'CAZAC code') having excellent auto-correlation and cross-correlation characteristics is used to establish initial synchronization using a PRACH and maintain synchronization using a Sounding Reference Signal (SRS). CAZAC is a code used to generate a Reference Signal (RS).

A Physical Uplink Control Channel (PUCCH), a Physical Uplink Shared Channel (PUSCH), a Physical Random Access Channel (PRACH), and a Sounding Reference Signal (SRS) Channel are used as LTE uplink channels. PRACH denotes an LTE uplink channel transmitted by a terminal so as to establish initial synchronization. PUCCH denotes an LTE uplink control channel, and includes Channel Quality Indicator (CQI) information, ACK/NACK, etc. PUSCH denotes an LTE uplink data channel. SRS is one of Reference Signals (RSs) of the LTE uplink, and is periodically transmitted by the terminal, thus maintaining the synchronization of the terminal, the initial synchronization of which has been established using the PRACH. Further, SRS indicates the quality of the uplink channel and then causes the channel quality to be used as the input information of the uplink scheduler of a base station.

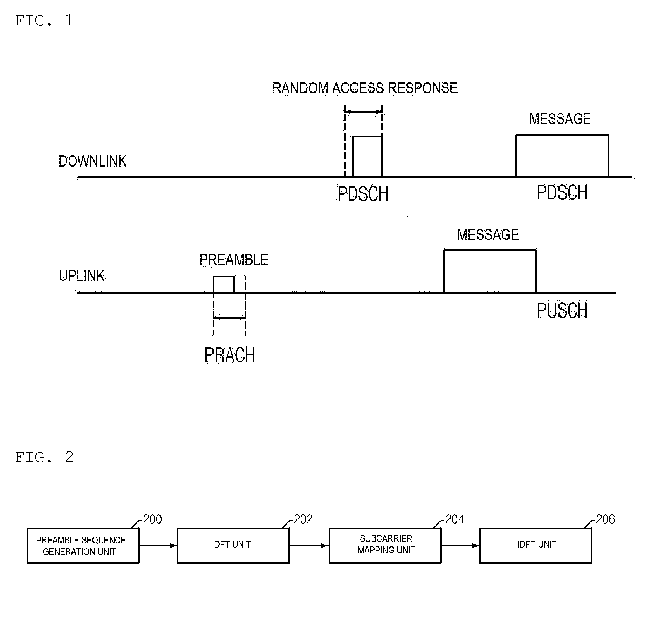

FIG. 1 is a diagram showing a method of performing a random access process in an LTE system. The random access process is used by a terminal to establish time synchronization with a network, or obtain wireless resources required to transmit uplink data.

Referring to FIG. 1, a terminal transmits a single preamble through a Physical Random Access Channel (PRACH) that is an uplink physical channel. As the preamble, one of 64 preambles is selected and transmitted.

When receiving the preamble transmitted from the terminal, a base station transmits a random access response to a downlink physical channel.

The terminal is allocated 64 preambles (that is, sequences), which can be used by the terminal, from the base station, and uses one selected from among the allocated sequences as a preamble for the random access process. The base station has information about all possible sequences and must simultaneously calculate correlations between all sequences. The maximum number of preambles allocated to the terminal is 64. In this case, the base station must detect a single sequence, which has been selected and transmitted by the terminal, and thus 64 correlators must be simultaneously implemented.

In detail, each correlator is represented by a multiplication of real numbers, and such a multiplication of real numbers in this way results in the use of multipliers from the standpoint of hardware. This is disadvantageous in that a large amount of hardware resources (especially multipliers) are used.

**Disclosure**

**Technical Problem**

An object of the present invention is to provide a scheme for allowing a base station to detect a preamble sequence used by a terminal from a plurality of preamble sequences while consuming less hardware resources, by using a simple method.

Another object of the present invention is to provide a scheme for reducing hardware resources upon designing a plurality of correlators required when a base station detects a preamble sequence, used by a terminal, from a plurality of preamble sequences.

**Technical Solution**

In order to accomplish the above objects, a reference signal generation apparatus according to the present invention includes a preamble sequence generation unit for receiving a first signal having a predetermined value and outputting a plurality of second signals, each having a length of 839 or 139, a Discrete Fourier Transform (DFT) unit for performing a DFT on the second signals received from the preamble sequence generation unit, and transforming the second signals to frequency domain signals, a subcarrier mapping unit for performing subcarrier mapping on the frequency domain signals output from the DFT unit, an Inverse DFT (IDFT) unit for performing an IDFT on signals output from the subcarrier mapping unit, an expansion unit for expanding signals received from the IDFT unit at a preset rate, and a quantization unit for quantizing signals received from the expansion unit.

In order to accomplish the above objects, a preamble sequence detection apparatus according to the present invention includes a reference signal generation unit for receiving a first signal having a predetermined value to generate preamble sequences, performing a Discrete Fourier Transform (DFT), subcarrier mapping, and an Inverse DFT (IDFT) on the generated preamble sequences, expanding resulting signals at a preset rate, and then quantizing expanded signals, a Physical Random Access Channel (PRACH) reception unit for receiving a PRACH signal transmitted from a terminal, and a correlation unit for detecting correlations between reference signals received from the reference signal generation unit and the signal received from the PRACH reception unit.

**Advantageous Effects**

The preamble sequence detection apparatus according to the present invention obtains synchronization between a terminal and a base station by calculating, with regard to a CP and a sequence constituting a PRACH, a point at which the sequence starts, and the base station can reduce hardware resources required to detect a preamble sequence used by the terminal using the synchronization.

**Description of Drawings**

FIG. 1 is a diagram showing a method of performing a random access process in an LTE system;
FIG. 2 is a block diagram showing a process in which a base station generates reference signals using 64 preamble sequences according to an embodiment of the present invention;
FIG. 3 is a diagram showing an example of a PRACH signal transmitted by a terminal to a base station according to an embodiment of the present invention;
FIG. 4 is a block diagram showing a process for quantizing a generated reference signal according to an embodiment of the present invention;
FIG. 5 is a block diagram showing a configuration in which the base station detects a preamble sequence transmitted by the terminal through a PRACH according to an embodiment of the present invention;
FIG. 6 is a block diagram showing the configuration of a correlation unit according to an embodiment of the present invention; and
FIG. 7 is a block diagram showing a shift block according to an embodiment of the present invention.

<Description of the Reference Numerals in the Drawings>

| | | | |
|---|---|---|---|
| 200: | preamble sequence generation unit | 202: | DFT unit |
| 204: | subcarrier mapping unit | 206: | IDFT unit |
| 400: | reference signal generation unit | 402: | expansion unit |
| 404: | quantization unit | 500: | PRACH reception unit |
| 502: | correlation unit | 504: | decision unit |

**Best Mode**

The above and other objects, features, and aspects of the present invention will be more clearly understood from the following detailed description of preferred embodiments taken in conjunction with the accompanying drawings. Hereinafter, the present invention will be described in detail so that those skilled in the art may easily understand and implement the present invention from those embodiments.

FIG. 2 is a diagram showing the structure of a Physical Random Access Channel (PRACH) transmitted by a terminal to a base station according to an embodiment of the present invention. As shown in FIG. 2, the structure of the PRACH is composed of a Cyclic Prefix (CP) and a sequence. The following Table 1 shows parameters of random access preambles of a PRACH, and Table 2 shows LTE specification for defining the length of a ZC sequence.

Table 1

| Preamble format | CP length ($T_{CP}$) | Sequence length ($T_{seq}$) |
|---|---|---|
| 0 | 3186*Ts | 24576*Ts |
| 1 | 21024*Ts | 24576*Ts |
| 2 | 6240*Ts | 2*24576*Ts |
| 3 | 21024*Ts | 2*24576*Ts |
| 4 | 448*Ts | 4096*Ts |

In this case, Ts = 1(15000*2048) sec.

Table 2

| Preamble format | $N_{ZC}$ |
|---|---|
| 0-3 | 839 |
| 4 | 139 |

The base station decides to use one preamble format among preamble formats based on a channel environment, a cell radius, etc., and broadcasts information about the preamble format to a terminal located in a cell. The terminal receives the broadcasted preamble format, and configures a PRACH using the received information.

As described above, the LTE system transmits/receives data by inserting a guard period, to which a cyclic Prefix (CP) is input, into a transmission signal for each symbol as a method for reducing multi-path influence (ghost). That is, the guard period to which the CP is input is inserted by lengthening the symbol period of a transmission signal to be transmitted, and so data is transmitted, thus reducing intersymbol interference that may occur due to the delay of symbols received while passing through the multi-path, and also reducing inter-channel interference owing to the maintenance of orthogonality between subcarriers.

The terminal selects one from among available preamble sequences, and transmits the selected preamble sequence through the PRACH. For example, the terminal may select one from among 64 available preamble sequences and transmit the selected preamble sequence through the PRACH.

FIG. 2 is a block diagram showing a process in which a base station generates reference signals using 64 preamble sequences according to an embodiment of the present invention. Below, the process for generating reference signals using 64 preamble sequences according to an embodiment of the present invention will be described in detail with reference to FIG. 2.

Referring to FIG. 2, a block for generating reference signals includes a preamble sequence generation unit 200, a Discrete Fourier Transform (DFT) unit 202, a subcarrier mapping unit 204, and an Inverse Discrete Fourier Transform (IDFT) unit 206.

In order to transmit control information, orthogonal sequences may be used. An orthogonal sequence denotes a sequence having excellent correlation characteristics. There is a Constant Amplitude Zero Auto-Correlation (CAZAC) sequence as an example of the orthogonal sequence.

A Zadoff-Chu (ZC) sequence, one of CAZAC sequences, will be described. The kth element c(k) of a root ZC sequence which is a root index M may be represented by the following Equation 1:

[Equation 1]

$$c(k) = \exp\left\{-\frac{j\pi Mk(k+1)}{N}\right\}, \quad \text{for N odd}$$

$$c(k) = \exp\left\{-\frac{j\pi Mk^2}{N}\right\}, \quad \text{for N even}$$

where N denotes the length of the ZC sequence, index M denotes a natural number equal to or less than N, and M and N are relatively prime to each other. If N is a prime number, the number of root indices of the ZC sequence is N-1.

[Equation 2]

$$\left|c(k)\right| = 1 \quad \text{for all k, N, M}$$

[Equation 3]

$$R_{M;N}(d) = \begin{cases} 1, & \text{for d = 0} \\ 0, & \text{for d} \neq 0 \end{cases}$$

[Equation 4]

$$R_{M_1,M_2;N}(d) = const \quad \text{for all } M_1, M_2$$

Equation 2 indicates that the magnitude of the ZC sequence is always 1, and Equation 3 indicates that the auto-correlation of the ZC sequence is represented by a Dirac-delta function. Here, the auto-correlation is based on a circular correlation. Equation 4 indicates that cross-correlation is always a constant.

It is assumed that, in a wireless communication system, cells are distinguished from each other using the root indices of the ZC sequence. The terminal needs to be aware of a root index that is available in the corresponding cell or a group of available root indices. The base station must broadcast an available root index or a group of available root indices to the terminal.

When the length of the ZC sequence is N, a number of root indices that are relatively prime to each other and are less than N are present. When N is a prime number, the number of root indices is N-1. In this case, the base station notifies the terminal of any one of N-1 root indices.

Each cell may use a variety number of root indices depending on the cell radius. When the cell radius increases, the number of ZC sequences between which orthogonality may be maintained through a cyclic shift may be decreased due to the influence of propagation delay or round trip delay and/or delay spread. That is, when the cell radius increases, even the number of cyclic shifts that are available in the corresponding root index may be reduced if the lengths of ZC sequences are uniform. In this way, sequences generated by cyclic shifts in the root index have orthogonality therebetween, and so they are also called Zero Correlation Zone (ZCZ) sequences. The minimum number of ZC sequences allocated to the terminal for each cell must be guaranteed, so that when the cell radius increases, the minimum number of ZC sequences may be ensured by increasing the number of root indices used in the cell.

The preamble sequence generation unit 200 generates 64 preamble sequences by shifting a ZC sequence, generated using CAZAC code.

The DFT unit 202 performs a DFT on the 64 preamble sequences generated by the preamble sequence generation unit 200. In relation to the present invention, the DTF unit 202 transforms the preamble sequences into frequency domain signals by performing N-DTF when the length of the ZC sequence is N (839 or 139). That is, if an input signal having a length of 839 or 139, which is a prime number, is received, the DFT unit 202 performs a DFT, and outputs a signal having a length of 839 or 139 which is a prime number.

The subcarrier mapping unit 204 maps the preamble sequences, transformed into frequency domain signals, to desired frequency bands. The IDFT unit 206 transforms preamble sequence signals mapped to the frequency bands into time domain signals by performing an IDFT. In relation to the present invention, the IDFT unit performs $2^n$ (where n is a natural number)-IDFT. As an example, if an input signal having a length of 839 or 139 is received, the IDTF unit performs $2^n$-IDFT and outputs a signal having a length of $2^n$. Of course, the IDTF unit may perform 24576-IDFT other

than $2^n$ (where n is a natural number)-IDFT, and output a signal having a length of 24576.

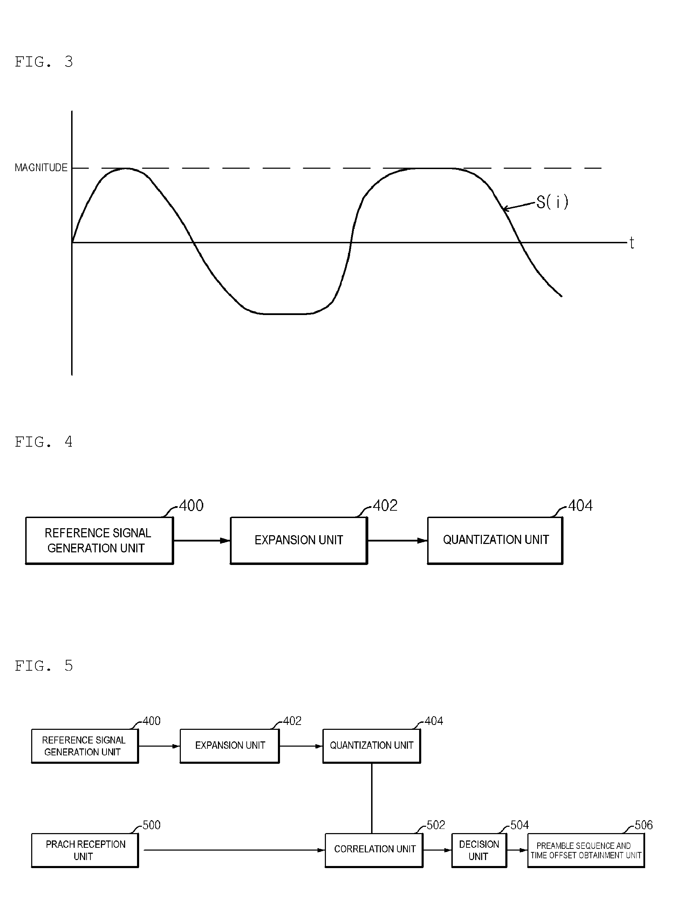

FIG. 3 is a diagram showing the signal pattern of a reference signal according to an embodiment of the present invention. As shown in FIG. 3, the reference signal exhibits the pattern of a normal sine wave except for a difference only in a period within a range between a maximum value and a minimum value. That is, the reference signal exhibits the characteristic of sequentially increasing or decreasing within the range between the maximum and minimum values. The present invention proposes a scheme for modifying a signal that is transferred to a correlation unit using the pattern of the reference signal.

FIG. 4 is a block diagram showing a process for modifying the reference signal generated in FIG. 2 according to an embodiment of the present invention. Next, the process for modifying the reference signal according to an embodiment of the present invention will be described in detail with reference to FIG. 4.

Referring to FIG. 4, a block for modifying the reference signal includes a reference signal generation unit 400, an expansion unit 402, and a quantization unit 404. The reference signal generation unit 400 generates a plurality of reference signals, each having a specific length, as shown in FIG. 2. The reference signals generated by the reference signal generation unit 400 are transferred to the expansion unit 402.

The expansion unit 402 expands the reference signals generated by the reference signal generation unit 400 at a preset rate. As described above, since the reference signals generated by the reference signal generation unit 400 have a sequentially increasing or sequentially decreasing pattern, the expanded signals also have a sequentially increasing or decreasing pattern. The rate of the expansion by the expansion unit 402 may be variously set.

The reference signals expanded by the expansion unit 402 are transferred to the quantization unit 404. The quantization unit 404 quantizes the received reference signals. That is, quantization is performed so that each received reference signal has a value of $2^m$ based on a predetermined criterion. In this way, the present invention expands each reference signal generated by the reference signal generation unit 400 at the preset rate, and then quantizes the expanded reference signal to have a value of $2^m$ based on the predetermined criterion.

FIG. 5 is a block diagram showing a configuration in which the base station detects a preamble sequence transmitted by the terminal through a PRACH according to an embodiment of the present invention. Below, a process in which the base station detects a preamble sequence transmitted by the terminal through a PRACH will be described in detail with reference to FIG. 5.

Referring to FIG. 5, a detection block diagram includes a PRACH reception unit 500, a reference signal generation unit 400, an expansion unit 402, a quantization unit 404, a correlation unit 502, a decision unit 504, and a preamble sequence and time offset detection unit 506.

The PRACH reception unit 500 receives a signal transmitted by the terminal through a PRACH. As described above, the terminal selects one from among the available preamble sequences, performs a DFT, subcarrier mapping, and an IDFT on the selected preamble sequence, adds a CP to a guard period, which is to be inserted, in order to promote the improvement of performance of a PRACH receiver in a time domain, and then transmits a resulting signal to the base station. The PRACH reception unit 500 transfers the signal received through the PRACH to the correlation unit 5602.

As shown in FIG. 3, the reference signal generation unit 400 generates reference signals by performing a DFT, subcarrier mapping, and an IDTF on the generated preamble sequences. The reference signal generation unit 400 transfers the generated reference signals to the expansion unit 402.

The expansion unit 402 expands the reference signals generated by the reference signal generation unit 400 at a preset rate. As described above, each reference signal generated by the reference signal generation unit 400 has a sequentially increasing or decreasing pattern, so that each expanded signal also has a sequentially increasing or decreasing pattern. The rate of expansion by the expansion unit 402 may be variously set.

The reference signal expanded by the expansion unit 402 is transferred to the quantization unit 404. The quantization unit 404 quantizes the received reference signal. That is, quantization is performed such that the received reference signal has a value of $\sum\limits_{j=0}^{J} 2^{m_j}$ based on a predetermined criterion, where $J$ is a natural number. Consequently, quantization is performed using the sum of multipliers of 2. As the value of $J$ increases, a quantization error may be reduced. However, in order to further reduce hardware resources, $J = 0$ may be set.

The correlation unit 502 detects correlations between the signal received from the PRACH reception unit 400 and the reference signals received from the quantization unit 440.

The following Equation 5 denotes a formula used when the correlation unit 502 detects correlations between the signal received from the PRACH reception unit 400 and the reference signals received from the quantization unit 404.

6

[Equation 5]

$$r_F = MAX\{ \sum_{i=0}^{\text{length of ref\_signals}-1} R(i)Q(i)_k^* \}_{k=0}^{\text{number of ref\_signals}-1}$$

where R(i) = signal received from the PRACH reception unit, and $Q(i) = \sum_{j=0}^{J} 2^{m_j}$ , $\mathbf{m}_j \in (1, 2, 3, 4\ K)$ , and $j =$ natural number.

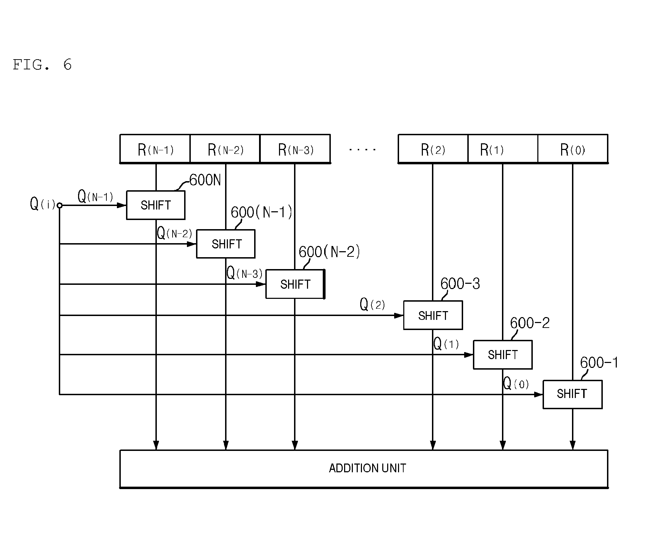

FIG. 6 is a diagram showing the configuration of the correlation unit according to an embodiment of the present invention. Below, the configuration of the correlation unit according to an embodiment of the present invention will be described in detail with reference to FIG. 6.

Referring to FIG. 6, the correlation unit includes a plurality of shift registers 600-1 to 600-N for shifting a digital signal received from the PARACH reception unit and an addition unit 602 for adding up the outputs of the plurality of shift registers 600-1 to 600-N. Unlike a conventional correlation unit in which a plurality of multipliers are configured to calculate the correlations between the signal received from the PRACH reception unit and the signals generated by the reference signal generation unit, the present invention configures a plurality of shift registers for shifting bits according to the magnitude of the signals received from the quantization unit. That is, the signals received from the quantization unit cause the signal received from the PRACH reception unit to be bit-shifted. A bit shift unit may be configured to take a large value of *J* in *Q(i)* (that is, the sum of a plurality of multipliers of 2) and to be divided into a plurality of bit shift registers so as to minimize a quantization error. As the value of *J* in $Q(i) = \sum_{j=0}^{J} 2^{m_j}$ is larger, a larger number of bit shift registers are required and the quantization error may be minimized. As the value of *J* is smaller, the correlators may be more simply implemented.

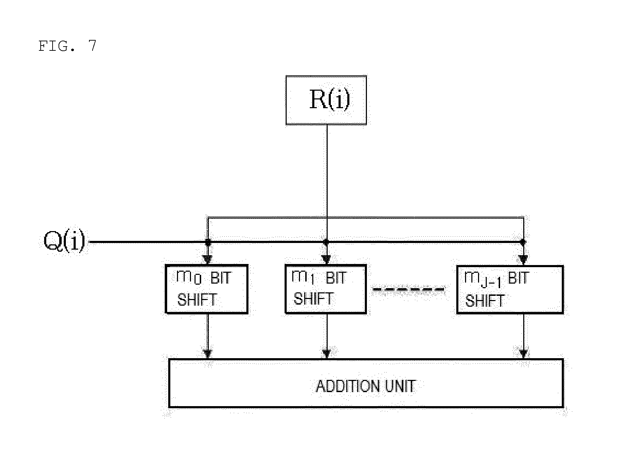

FIG. 7 is a block diagram showing an example of the case of J >= 1.

In this way, an increase in computation time and the waste of hardware resources caused by the use of multipliers may be prevented.

The correlation unit 502 transfers the correlations $r_F$ detected using Equation 5 to the decision unit 504. The decision unit 504 detects a correlation having a highest value from the correlations received from the correlation unit, and transfers information about the detected correlation to the preamble sequence and time offset detection unit 506.

The preamble sequence and time offset detection unit 506 may know a preamble sequence used by the terminal by checking a reference signal corresponding to the received correlation. That is, a correlation between the reference signal, in which a preamble sequence identical to the preamble sequence used by the signal received from the PRACH reception unit 500 is used, and the signal, received from the PRACH reception unit 500, has the highest value. By performing the above procedures, the base station can detect the preamble sequence used by the terminal and a time offset related to information about the time at which the signal was transmitted through the PRACH.

Although the present invention has been described with reference to embodiments shown in the drawings, these embodiments are only exemplary and those skilled in the art will appreciate that various modifications and other equivalent embodiments are possible from the above embodiments.

**Claims**

1. A reference signal generation apparatus comprising:

a preamble sequence generation unit for receiving a first signal having a predetermined value and outputting a plurality of second signals, each having a length of 839 or 139;
a Discrete Fourier Transform (DFT) unit for performing a DFT on the second signals received from the preamble sequence generation unit, and transforming the second signals to frequency domain signals;
a subcarrier mapping unit for performing subcarrier mapping on the frequency domain signals output from the DFT unit;
an Inverse DFT (IDFT) unit for performing an IDFT on signals output from the subcarrier mapping unit;
an expansion unit for expanding signals received from the IDFT unit at a preset rate; and
a quantization unit for quantizing signals received from the expansion unit.

2. The reference signal generation apparatus of claim 1, wherein the IDFT unit receives a signal having a length of $2^n$ (where n is a natural number) from the subcarrier mapping unit, performing an IDFT on the signal, and then transforming the signal into a time domain signal having a length of $2^n$ (where n is a natural number).

3. The reference signal generation apparatus of claim 1, wherein the preamble sequence generation unit generates 64 preamble sequence signals, each having a length of 839 or 139.

4. The reference signal generation apparatus of claim 3, wherein the preamble sequence generation unit uses Constant Amplitude Zero Auto-Correlation (CAZAC) code having excellent auto-correlation or cross-correlation characteristics.

5. A preamble sequence detection apparatus comprising:

a reference signal generation unit for receiving a first signal having a predetermined value to generate preamble sequences, performing a Discrete Fourier Transform (DFT), subcarrier mapping, and an Inverse DFT (IDFT) on the generated preamble sequences, expanding resulting signals at a preset rate, and then quantizing expanded signals;
a Physical Random Access Channel (PRACH) reception unit for receiving a PRACH signal transmitted from a terminal; and
a correlation unit for detecting correlations between reference signals received from the reference signal generation unit and the signal received from the PRACH reception unit.

6. The preamble sequence detection apparatus of claim 5, wherein the reference signal generation unit comprises:

a preamble sequence generation unit for receiving a first signal having a predetermined value and outputting a plurality of second signals, each having a length of 839 or 139;
a Discrete Fourier Transform (DFT) unit for performing a DFT on the second signals received from the preamble sequence generation unit, and transforming the second signals to frequency domain signals;
a subcarrier mapping unit for performing subcarrier mapping on the frequency domain signals output from the DFT unit;
an Inverse DFT (IDFT) unit for performing an IDFT on signals output from the subcarrier mapping unit;
an expansion unit for expanding signals received from the IDFT unit at a preset rate; and
a quantization unit for quantizing signals received from the expansion unit.

7. The preamble sequence detection apparatus of claim 6, wherein the correlation unit performs the following equation:

$$r_F = MAX\{ \sum_{i=0}^{\text{length of ref\_signals-1}} R(i)Q(i)_k^* \}_{k=0}^{\text{number of ref\_signals-1}}$$

where $R$(i) = signal received from the PRACH reception unit, and

$$Q(i) = \sum_{j=0}^{J} 2^{m_j} \quad ,, \mathbf{m}_j \in (1,2,3,4K), \text{ and } j = \text{natural number.}$$

8. The preamble sequence detection apparatus of claim 7, further comprising a decision unit for deciding on a correlation having a maximum value among the correlations received from the correlation unit.

9. The preamble sequence detection apparatus of claim 8, further comprising a preamble sequence and time offset detection unit for detecting a preamble sequence included in the signal received from the PRACH reception unit using the correlation received from the decision unit.

FIG. 1

RANDOM ACCESS RESPONSE

MESSAGE

DOWNLINK

PDSCH                    PDSCH

MESSAGE

PREAMBLE

UPLINK

PUSCH

PRACH

FIG. 2

PREAMBLE SEQUENCE GENERATION UNIT — 200

DFT UNIT — 202

SUBCARRIER MAPPING UNIT — 204

IDFT UNIT — 206

FIG. 3

MAGNITUDE

S( i )

t

FIG. 4

| REFERENCE SIGNAL GENERATION UNIT 400 | → | EXPANSION UNIT 402 | → | QUANTIZATION UNIT 404 |
|---|---|---|---|---|

FIG. 5

REFERENCE SIGNAL GENERATION UNIT 400 → EXPANSION UNIT 402 → QUANTIZATION UNIT 404

PRACH RECEPTION UNIT 500 → CORRELATION UNIT 502 → DECISION UNIT 504 → PREAMBLE SEQUENCE AND TIME OFFSET OBTAINMENT UNIT 506

FIG. 6

FIG. 7

R(i)

Q(i)

| $m_0$ BIT SHIFT | $m_1$ BIT SHIFT | — — — — | $m_{J-1}$ BIT SHIFT |

ADDITION UNIT

## INTERNATIONAL SEARCH REPORT

| International application No. |
| --- |
| **PCT/KR2011/001137** |

**A. CLASSIFICATION OF SUBJECT MATTER**

*H04B 7/26(2006.01)i, H04B 1/16(2006.01)i*

According to International Patent Classification (IPC) or to both national classification and IPC

**B. FIELDS SEARCHED**

Minimum documentation searched (classification system followed by classification symbols)
H04B 7/26; H04W 74/08; H04L 27/06; H04W 56/00; H03D 1/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: preamble, reference signal, fourier, subcarrier, sychronization

**C. DOCUMENTS CONSIDERED TO BE RELEVANT**

| Category* | Citation of document, with indication, where appropriate, of the relevant passages | Relevant to claim No. |
| --- | --- | --- |
| A | Picochip Technology, "An Overview of LTE PRACH Detection for the PC20x", CTO Office Technical Note, CTO-TN-0009, Beijing, China (http://support.picochip.com) 02 April 2008<br>See pages 6-7 and figures 2-3. | 1-9 |
| A | NEC, "RACH Preamble Length" In: 3GPP TSG RAN WG1 Meeting #46bis R1-062766, Seoul, Korea 09 October 2006<br>See pages 1-2 and figure 1. | 1-9 |
| A | US 2002-0114355 A1 (JAE-YOEL KIM et al.) 22 August 2002<br>See abstract and claims 1-4. | 1-9 |
| A | KR 10-0313928 B1 (LG INFORMATION & COMMUNICATIONS LTD.) 15 November 2001<br>See abstract, claims 1-3 and paragraphs [27]-[36]. | 1-9 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 31 OCTOBER 2011 (31.10.2011) | **31 OCTOBER 2011 (31.10.2011)** |

| Name and mailing address of the ISA/KR<br>Korean Intellectual Property Office<br>Government Complex-Daejeon, 139 Seonsa-ro, Daejeon 302-701, Republic of Korea<br>Facsimile No. 82-42-472-7140 | Authorized officer<br><br>Telephone No. |
| --- | --- |

Form PCT/ISA/210 (second sheet) (July 2009)

**INTERNATIONAL SEARCH REPORT**
Information on patent family members

International application No.

**PCT/KR2011/001137**

| Patent document cited in search report | Publication date | Patent family member | Publication date |
|---|---|---|---|
| US 2002-0114355 A1 | 22.08.2002 | AU 2002-24185 A1 | 03.06.2002 |
| | | AU 2002-24185 B2 | 20.11.2003 |
| | | CA 2397965 A1 | 30.05.2002 |
| | | CA 2397965 C | 25.10.2005 |
| | | CN 1175591 C0 | 10.11.2004 |
| | | CN 1395766 A0 | 05.02.2003 |
| | | EP 1209843 A2 | 29.05.2002 |
| | | EP 1209843 A3 | 12.10.2005 |
| | | JP 03-636707 B2 | 06.04.2005 |
| | | JP 2004-515112 A | 20.05.2004 |
| | | JP 2004-515112 T | 20.05.2004 |
| | | KR 10-0498919 B1 | 04.07.2005 |
| | | KR 20020039589A | 27.05.2002 |
| | | US 7027444 B2 | 11.04.2006 |
| | | WO 02-43279 A1 | 30.05.2002 |
| KR 10-0313928 B1 | 15.11.2001 | NONE | |

Form PCT/ISA/210 (patent family annex) (July 2009)